# EUROPEAN PATENT SPECIFICATION

(11) **EP 1 752 043 B1**
(45) Date of publication and mention of the grant of the patent: **05.08.2015**
(21) Application number: 05076849.8
(22) Date of filing: 09.08.2005
(51) Int. Cl.: A01N 37/44, A01N 57/12, A01N 37/36, A01N 37/06, A01N 37/04, A01N 37/02

(54) **Molluscicide composition, dosage forms comprising such compositions and method for its use.**
Molluskizide Zusammensetzung, Dosierungsformen, die diese Zusammensetzungen enthalten und Verfahren zu ihrer Anwendung
Composition molluscicide, formes de dosage contenant ces compositions et procédé pour son utilisation

(43) Date of publication of application: 14.02.2007
(73) Proprietor: Denka Registrations B.V., 3711 NB Barneveld (NL)
(72) Inventor: Den Braber, Antonie Arie, 3844-GC Harderwijk (NL); Moskal, Janusz Ryszard, 3871 CE Hoevelaken (NL)
(74) Representative: EP&C

(56) References cited:
- EP-A- 1 312 260
- WO-A-02/09518
- WO-A-81/00187
- WO-A-96/05728
- WO-A-97/26789
- WO-A-99/25194
- WO-A-99/39576
- WO-A-03/069996

## Description

The present invention relates in first instance to molluscicide compositions for controlling, killing and/or inactivating members of the mollusc phylum, in particular, slugs and snails.

Molluscs are a diverse group of organisms. They appear in marine, freshwater and terrestrial habitats. An important characteristic of most molluscs is the head-foot region. Most molluscs are strongly cephalized; that is, they have a well-developed head, in which is located a mouth and a concentration of nervous and sensory functions. Adjacent to the head is a large, muscular foot formed from the ventral body wall. Used primarily in locomotion, the surface of the foot is sometimes ciliated and contains numerous mucous glands. Molluscs are diverse in their food habits, ranging from species that graze on microscopic algae, to those that eat the leaves and fruits of terrestrial plants, to predators that capture fish and other molluscs. Many species of molluscs are important to humans. Several species can act as important sources of protein, while other species are pests in gardens, landscapes, and greenhouses and to crops, plants and fruits. Some are essential components in the life cycles of human parasites, including devastating diseases such as schistosomiasis.

Snails and slugs belong, together with gastropods, to the class of Gastropoda of the phylum molluscs. Gastropods such as the snail and slug characteristically have a single, usually coiled shell or no shell at all, a ventral muscular foot for locomotion, and eyes and feelers located on a distinct head. Snail and slugs are among the most bothersome pests in many gardens and landscape situations.

Common snail pests that cause problems in for example gardens, in greenhouses and crop field include *Helix spp.,* the brown garden snail (*Helix aspersa),* and *Helix nemoralis,* the brown-lipped, grove or banded wood snail (*Cepaea nemoralis*), bush snail (*Zonitoides arboreus),* white garden snail (*Theba pisana*), subulina snail (*Subulina octona), Helicella spp., Cepaea spp.*

Several species of slugs are frequently causing damage to plants in for example gardens, greenhouses and landscape situations. Common slug pests that cause problems include *Deroceras reticulatum, Deroceras laeve* (smooth slug), the banded slug *Limax poirieri*, the greenhouse slug *Milax gagates, Arion* spp, *Arion subfucus* (dusky slug), *Arion circumscriptus* (gray garden slug), *Arion hortensis* (black filed slug), *Arion rufus* (large red slug), *Arion ater* (large black slug), *Arion lusitanicus* (Spanish slug), great gray garden slug *(Limax maximus),* tawny garden slug (*L. flavus), Limax glavus* (spotted garden slug), *Limax tenellus* (slender slug), gray garden slug *(Agriolimax reticulatis), Ariolimax columbianus* (banana slug).

The molluscs snails and slugs feed on a variety of living plants as well as on decaying plant matter. On plant they chew holes with edges in leaves and can clip succulent plant parts. They can also chew fruit and young plant bark. Because they prefer succulent foliage, they are the primary pests of seedlings, herbaceous plants, and (ripening) fruits, including strawberries, artichokes, and tomatoes, that are close to the ground. However they will also feed on foliage, ornamental plants, leafy vegetables and fruit of trees, and especially citrus is susceptible to damage.

In plants, vegetables, flowers and fruit, even slight slug or snail damage causes considerable economic loss. Such produce loses most, if not all, market value once even very minor slug or snail damage is visible. As a consequence, their potential for damage is considerable and protection of plants from the damage by molluscs is essential.

Several measures can be taken in order to attempt to control and combat mollusc, especially snail and slug, pests.

Friendly management can be applied in small gardens and requires the removal of the mollusc, especially snail and slug, habitat and shelters, a proper choice and structure of the garden, and regular habitat modifications. The introduction of natural predators of the molluscs, like ground beetles, might help to keep the infestation low. Friendly management calls for modification of the environment and is in general not suitable for application in larger gardens, greenhouses, crop fields and parks.

More rigorous but still environmentally responsible management is based on application of copper band and dust barriers. Materials such as sawdust, ash, and lime can be suitably used for plant protection by the application of these materials around those plants that require protection.

However, the above mentioned methods are in general not adequate when drastic management of the pest is required. Such type of management of the pest requires the use of chemical substances. Chemical substances that are used for killing, controlling and/or inactivating molluscs, including slugs and snails are generally known as molluscicides and include a wide variety of chemical compounds.

As an example, the use of iron-phosphate containing baits (Escar-go, Slug-go, Worry Free produced by W. Neudorff GmbH) as molluscicides has become popular as replacement for products based on methiocarb (Mesural) and metaldehyde (Deadline). The latter two exhibit relative high secondary toxicity, that is the poisoning of non-target small mammals, birds, and reptiles by the poisoned molluscs or administrated bait. Metaldehyde, as an example, has been used since the 1930's and is thought to work by dehydrating its victims. It is usually applied to the ground around plants to attract and kill slugs and snails.

Different molluscicides display different modes of action. As an example, several molluscicides are believed to act as contact-poison, requiring direct contact with the pest, whereas others are believed to act as molluscicide once it has been ingested by the pest. The latter are known in the art as stomach poisons. Various molluscicides are declared to exhibit plural modes of action.

WO97/26789 (Young) reveals compositions of stomach-action molluscicides that include a metal complexone as an active ingredient, with metal-containing ethylenediaminetetraacetic acids (EDTA) being the most preferred metal complexone. The term complexone as used therein refers to an organic ligand containing at least one iminodiacetic group or two aminoacetic groups which forms stable complexes with most cations. A wide variety of metal-containing complexones, including iron-containing complexones are stated to be applicable as stomach-action molluscicides.

For a metal complexone to be applicable as a stomach-action molluscicide, the metal complexone needs to display a toxic effect after ingestion by the pest. Disadvantage of the currently available compositions of iron-containing complexones such as those disclosed in WO97/26789 is that the toxic effects induced by such iron-containing complexone containing compositions are found to be low or absent.

It appears that, in spite of the fact that several complexones are chemically related and all can act as chelating agents for metals, including iron, only EDTA en N-hydroxyethylenediaminetriacetic acid (HEDTA) possess reasonable activity as stomach-action molluscicides when combined with iron in a bait. In contrast, other complexones including EDDHA, DTPA, CDTA, EGTA, and NTA combined with iron according to WO97/26789 do not, or at most very limited, display the toxic effects, for example in the mollusc *Deroceras reticulatum,* required to be considered a useful and suitable molluscicide.

Also tests applying iron-containing complexones (for example according to WO97/26789), showed that several complexones per se or according to WO97/26789 have low or no desired effect in two different types of molluscs. Thus, these tests confirmed the above indication that, in contrast to iron-containing EDTA, other complexones have limited applicability as poisons in molluscicides.

It is apparent that different chelate forming agents provide different toxicity of the molluscicide. This per se is not surprising when taking into consideration that the toxicological mechanisms of the metal chelates in mollusc is not clear. The manifold interactions between the different chelates used, their concentration, internal digestive juices, external conditions, food particles and matrix, cell membranes, enzymes and types of bait used do not allow the prediction whether a chelate forming agent is an effective molluscicide.

It can be concluded that usage of iron-containing complexones as molluscicides is limited due to iron-containing complexones having low or no effects on molluscs, rendering it difficult or even impossible to control or combat molluscs pests.

Different chelates display different stability at particular pH values. As an example manufacturers of chelates typically quote stability or effectiveness as a Fe(III) chelate stability of NTA at pH 1-3, DPTA at pH 1-7 and EDTA at pH 1-6. At pH higher than such ranges, these chelating agents lack ability to stabilise the iron against precipitation as, by example, the hydroxide. As an example, the chelates DTPA and EDDHA are both are active in an other pH-range: DTPA-iron chelate works especially well if the pH is lower than pH 6,5 whereas EDDHA-iron chelate is active as a chelate in a wider pH-range then DTPA and is still active until pH 8. Also, while iron is known to readily chelate with EDTA, such a complex displays stability in a limited pH-range only. Iron in these EDTA complexes is known to tend to precipitate out as ferric hydroxide at higher pH values (as an example pH greater than 9).

In relation to the present invention reference is made to WO96/05728, in which terrestrial mollusc stomach poisons comprising an effective amount of ferric edetate or a ferric hydroxyethyl derivative of edetic acid are revealed.

WO96/05728 also reveals mollusc stomach poisons comprising an iron compound selected from the group consisting of iron proteins, iron carbohydrates, and iron salts and a second component selected from the group consisting of edetic acid, hydroxyethyl derivative of edetic acid, or salts thereof and an inert carrier material edible to molluscs.

A disadvantage of this type of compositions is that, in field conditions, the efficacy and the activity of many metal salts is greatly attenuated. This is most likely due to both dilution of the metal ions and the metal ions becoming chemically bound in the soil and being unavailable for toxic action.

In order to optimise molluscs pest control, availability of the iron for toxic action should not be dependent on, as example, the quality and composition of the soil, and it's iron-binding properties, as will be if the iron is presented in the form of iron proteins, iron carbohydrates, and iron salts.

¶ WO0209518 describes molluscical compositions comprising the iron-complexone FeDTPA and activity-enhancing additives, preferably surfactants, including EDDS. 5

When considering the above mentioned limitations and drawbacks in the stability, efficacy and use of the currently available components and compositions in molluscicides, including complexones and iron salts, there is need for alternative, more effective, more stable components and compositions that can be used as molluscicides.

In order to provide for a solution for the above mentioned problems, the inventor of the present invention has performed research and unexpectedly found that the disadvantage of the little or no toxicity to molluscs of complexones can be overcome by a composition at least comprising a complexone further comprises a complexone activator.

The invention relates to compositions, methods and uses as defined by the claims.

Currently it is not fully understood by what mechanism the composition at least comprising a complexone and a complexone activator exerts its advantageous effect as a molluscicide and it is therefor as yet not desirable to speculate whether it might act, by example, as a stomach or contact poison. Thus although it is not completely clear by which mechanism the composition according to the current invention exerts its effects, it is clear that compositions according to the invention act as effective molluscicides.

Many complexones have, as indicated above, little or no toxicity to molluscs per se. The presence of an activator in combination with such a complexone renders the combination clearly more toxic than could be expected in view of the toxicity of the combination of the components. The combination of complexone and an activator shows synergistic effect over the activity of the separate components.

A used herein, "complexone" refers to any organic ligand containing at least one iminodiacetic group or two aminoacetic groups which forms stable complexes with most cations. Such complexones are known by those skilled in the art, and non-limiting examples of these complexones include
- DTPA (also referred to as: Diethylenetriaminepentaacetic acid; Diethylenetriamine-N,N,N',N',N"-pentaacetic acid; Pentetic acid);
- DDHA (also referred to as ethylene-di-amine bis-(2-hydroxyphenyl)acetic acid);
- EDDHA (also referred to as: ethylenediamine bis(2-hydroxyphenyl)acetic acid);
- CDTA (also referred to as: CyDTA; 1,2-Cyclohexylene-dinitrilotetraacetic acid);
- EGTA (also referred to as : [Ethylenebis(oxyethylene-nitrilo)]tetraacetic acid; Egtazic acid);
and NTA (also referred to as : Nitrilotriacetic acid; alpha,alpha',alpha''-trimethylaminetricarboxylic acid; aminotriacetic acid). Preferably, the complexone is selected from the group consisting of DTPA and DDHA. The complexone is not EDTA (ethylenediaminetetraacetic acid) or HEDTA (hydroxyethylethylenediaminetriacetic acid)

A used herein, "metal complexone" refers to any complexone that has formed a complex with a cation. A used herein "iron complexone" or "iron-containing complexone" refers to any metal complexone wherein the cation is iron (II) and/or iron (III), this is Fe²⁺ and/or Fe³⁺.

A used herein "complexone activator" refers to any compound or compounds that in combination with a complexone, for example an iron-containing non-EDTA complexone, display molluscicide activity and/or induces toxic effects in molluscs, whereas, the complexone activator or the complexone per se do not displays such activity or only to a limited extent.

A used herein, the term "little or no toxicity to molluscs" refers to percentage of mortality of molluscs that is equal to or less than 20% after 168 hours in response to a (potential) molluscicide, as can, by example, be determined by the "bioprotocol" method described in Example 1.

In addition to the composition, the present invention also relates to a dosage form suitable to present the molluscicide composition to the target organism and to combat or treat mollusc pests.

In addition to the composition and the dosage form, the present invention also relates to a method for mollusc pest control comprising the step of providing bait to molluscs, characterised in that the composition of the bait comprises a composition according to the invention, as described herein.

According to one aspect of the present invention, the complexone is preferably selected from the group consisting of DTPA and DDHA, more preferably DTPA is selected as it is found to act more rapidly.

According to the invention, the complexone is not EDTA or HEDTA.

It will be clear to a person skilled in the art that the iron-containing complexone can be used alone or in combination with other suitable (iron-containing) complexones in the compositions according to the present invention.

According to one embodiment of the present invention, suitable complexone activators include organic acids selected from the group consisting of malonic acid, lactic acid, succinic acid, acetic acid, or citric acid or the mixtures and/or salts thereof.

According to another embodiment of the present invention, the molluscicide composition comprising at least an iron-containing complexone preferably comprises one or more organic acids or the salts thereof selected from the group consisting of malonic acid, lactic acid, succinic acid, acetic acid, or citric acid or the mixtures and/or salts thereof, preferably malonic acid and/or its salts.

According to one embodiment of the present invention the complexone activator is non-iron containing EDTA (also referred to as: ethylenediaminetetraacetic acid, Edetic acid), or a salt thereof. Examples include, but are not limited to di-sodium EDTA.

According to yet another aspect of the present invention lecithin, preferably soy lecithin, can be applied as complexone activator in molluscicide compositions of the invention.

It will be clear to a person skilled in the art that the complexone activator can be used alone or in combination with other suitable complexone activators to provide for the complexone activator.

Preferably, the composition according to the present invention comprises 0-10 w/w % (percentage of dry weight of the composition), more preferably 1-7 w/w %, most preferably 3-5 w/w % complexone and 0-8 w/w %, more preferably 0.5- 5 w/w %, most preferably 1-3 w/w % complexone activator.

In another preferred embodiment, the composition according to the present invention is characterised in that the weight ratio between iron-containing complexone and complexone activator is in the range of 0.01-10, more preferred between 0.1 - 8, most preferred between 0.5 - 3.

In a preferred embodiment of the present invention, the molluscicide comprises phagostimulant. A wide variety of phagostimulants for molluscs are known to those skilled in the art. Examples include, but are not limited to carbohydrates and sugars like sucrose, amylose, maltose and xylose, sucrose, glucose, molasses and albumin, as an example from egg. It will be clear to a person skilled in the art that the phagostimulant can be used alone or in combination with other suitable phagostimulants to provide for the phagostimulant in the composition according to the present invention.

Preferably, the composition according to the present invention that contains a phagostimulant, comprises 0-8 w/w %, more preferably 1-8 w/w%, most preferably 2-6 w/w % phagostimulant.

Additionally, the composition of the present invention can further comprise base components and/or fillers and/or additives.

Base components usually include a mollusc food such as cereal, wheat flour, corn flour, bread crumbs and/or pancake mix in order to provide a for the mollusc edible and attractive bait and/or food. Base components can be advantageously selected from one or more from the group consisting of wheat flour, corn flour, breadcrumbs and pancake mix.

Fillers can be selected from one or more from the group consisting of bentonite, calciumcarbonate, viscosity altering components, preferably thixotropes, more preferably Acti-Gel 208, polyethylene glycols, preferably PEG 1500, diatomaceous earth, alumina, coalite chalk (Coallietenkalk CC5 distributed by Poortershaven Industriele Mineralen BV), pumice, ironoxide and iron hydroxide oxide.

Additives can be selected from one or more from the group consisting of wax, water-resistance altering additives, as example powdered linseed, dyes for coloration, taste altering additives, as an example bitrex, polysorbates and/or sorbitan esters, as an example Span 80 and/or Tween 80, and odours, as example banana odour.

Those skilled in the art will appreciate that various other components known in the art to be useful, either alone of in combination, in the preparation of molluscicides can be candidates for inclusion in any of the compositions according to the present invention.

According to a preferred embodiment of the invention, the composition comprises:
- 0-10 w/w%, preferably 1-7 w/w%, more preferably 3-5 w/w% Fe DTPA;
- 0-8 w/w%, preferably 0.5- 5 w/w %, more preferably 1-3 w/w % diNA EDTA;
- 0-8 w/w %, preferably 1-7 w/w %, more preferably 2-6 w/w %, egg albumin;
- 0-5 w/w %, preferably 1-4 w/w%, more preferably 1.5-3 w/w %, sugar;
- 0-90 w/w %, preferably 20 - 70 w/w %, more preferably 25-45 w/w % wheat flour and/or breadcrumbs;
- 0-90 w/w %, preferably 20 - 70 w/w %, more preferably 25-45 w/w % corn flour;
   and
- 0-40 w/w%, preferably 10-30 w/w% , more preferably 15-25 w/w % calciumcarbonate.

The above mentioned preferred embodiment in particular displayed surprisingly effective activity towards molluscs, as will become clear from the examples below, and is with advantage suitable as molluscicide.

According to yet another preferred embodiment of the invention, the composition comprises:
- 0-10 w/w%, preferably 1-7 w/w%, more preferably 3-5 w/w% Fe DTPA;
- 0-8 w/w%, preferably 0.5- 5 w/w %, more preferably 1-3 w/w % diNA EDTA;
- 0-8 w/w %, preferably 1-7 w/w %, more preferably 2-6 w/w %, egg albumin;
- 0-5 w/w %, preferably 1-4 w/w%, more preferably 1.5-3 w/w %, sugar;
- 0-90 w/w %, preferably 20 - 70 w/w %, more preferably 25-45 w/w % wheat flour and/or breadcrumbs;
- 0-90 w/w %, preferably 20 - 70 w/w %, more preferably 25-45 w/w % corn flour;
   and
- 0-40 w/w%, preferably 10-30 w/w% , more preferably 15-25 w/w % coalite chalk.

The above mentioned preferred embodiment displayed surprisingly effective activity towards molluscs and is with advantage suitable as molluscicide.

Those skilled in the art will appreciate that it is preferable to prepare the products subject of the present invention in a dosage form that is easy for users to use and combat, kill or treat mollusc pests. The molluscicide of the present invention is advantageously presented in a dosage form such as a grain, a pellet, a granule, a powder, a capsule, a solution, a dispersion, a paste, a tablet, with a grain, a pellet or a tablet whereby a granule being most preferred.

In addition to the composition and the dosage form, the present invention also relates to a method for mollusc pest control, comprising the step of providing bait to molluscs, characterised in that the composition of the bait comprises a composition, molluscicide or dosage form according to the invention, and as described herein.

Preferably, the method for mollusc pest control according to the present invention comprises the step of providing bait to molluscs, characterised in that the composition of the bait comprises:
- 0-10 w/w%, preferably 1-7 w/w%, more preferably 3-5 w/w% Fe DTPA;
- 0-8 w/w%, preferably 0.5- 5 w/w %, more preferably 1-3 w/w % diNA EDTA;
- 0-8 w/w %, preferably 1-7 w/w %, more preferably 2-6 w/w %, egg albumin;
- 0-5 w/w %, preferably 1-4 w/w%, more preferably 1.5-3 w/w%, sugar;
- 0-90 w/w %, preferably 20 - 70 w/w %, more preferably 25-45 w/w % of one or more from a component selected from the group consisting o wheat flour and/or breadcrumbs and combinations thereof;
- 0-90 w/w %, preferably 20 - 70 w/w %, more preferably 25-45 w/w % corn flour;
   and
- 0-40 w/w%, preferably 10-30 w/w% , more preferably 15-25 w/w % calciumcarbonate.

As will be appreciated by those known skilled in the art, the composition and dosage forms according to the present invention can further comprise a wide variety of other suitable compounds like surfactants and/or dyes and/or flavours and/or impregnators. Also preservatives, preferably sorbic acid and salts thereof, ascorbic acids and salts thereof, and sodium benzoate can be contained in the composition and/or dosage forms according to the present invention.

### EXAMPLES

### Example 1

In order to establish the effect of different molluscicide compositions, tests according to the methodology described below were performed.

### Bioprotocol

Tests were carried out in plastic or glass arenas (40*20*29 cm) which was covered tightly with fine-meshed netting at ambient temperature (14-28 °C, relative humidity 60-85%) and dim light. The bottom of each arena was covered with a soil layer of approximately 5 cm thick.

Ten fully grown molluscs (slugs, mainly *Dereoceras laeve,* but also *Arion* species; snails, mainly *Helix aspersa* and *Helix nemmoralis*) were liberated in the arena. No conditioning was applied.

In "no choice" tests molluscs had unlimited access to water and bait.

In "free choice" tests the molluscs could freely choose between standard fodder (lettuce) and bait. Mollusc behaviour was monitored every 24 hours during the 168 hours of every individual test and mortality was determined.

It was noticed that bait formulations caused a clear feed preference effect that was manifested strongly from the beginning of free choice tests. The molluscs fed on both the administered bait and lettuce during the first 24 hrs only, but later on, the molluscs exclusively consumed bait.

### Example 2

Control tests were carried out using the bioprotocol of Example 1, but bait was replaced by pure wheat or corn flour. No mortality was observed in the control tests.

### Example 3

### Components used in the preparation of

compositions/molluscicides include:
Non-EDTA complexones: Iron di-ethylene tri-amine penta-acetic acid complex (FeDTPA); Iron ethylene-di-amine bis-(2-hydroxyphenyl) acetic acid complex (FeDDHA)
Salts: di-sodium malonate, di-sodium lactate, di-sodium succinate, sodium acetate (NaAc), disodium ethylene-di-amine tetra-acetic acid (di-Na EDTA), di-sodium citrate.
Active components: soy lecithin.
Phago-stimulants: sucrose, sugar, egg albumin (EggAlb).
Fodder components: wheat flour, corn flour, breadcrumbs, pancake mix.
Fillers: calcium carbonate (CaCO3), bentonite, mineral thixotropes such as Acti-Gel 208, polyethyelene glycols, such as PEG 1500.
Additives: wax, water-resistance altering additives, as example powered linseed, dyes for coloration, taste altering additives, as example bitrex, polysorbates and/or sorbitan esters, as example Span 80 and/or Tween 80, and odours, as example banana odour.
Preservatives: sorbic acid and salts thereof, ascorbic acids and salts thereof, sodium benzoate and others suitable compounds known in the art.

### Example 4

The compositions without complexones described Table 1 can be prepared by a wide variety of methods known to those skilled in the art.

### Formulations without complexones:

**Table 1**

| Code | **Complexone Activator** | Base component | Phagostimulant | Filler | Additive |
|---|---|---|---|---|---|
| 01-78/1 | none | Pancake mix 96% | EggAlb 4% | None | none |
| 01-78/2 | none | Pancake mix 96% | Sucrose 4% | None | none |
| 01-78/3 | NaAc 4% | Pancake mix 96% | none | None | none |
| 01-79/11 | di-Na EDTA 3% | Pancake mix 93% | EggAlb 4% | None | none |
| 01-80/2 | none | Pancake mix 71% | EggAlb 4% | Bentonite 25% | none |

### Example 5

In order to establish the effect of different molluscicide compositions as described in Example 4, tests according to the methodology of Example 1 were performed. Results of these experiments are described in Table 2:

### Formulations without complexones:

**Table 2**

| Code | **% mortality (average)** | | | Test type | Amount of tests |
|---|---|---|---|---|---|
| | 120 hr | 144 hr | 168 hr | | |
| 01-78/1 | 0 | 0 | 0 | no choice | 1 |
| 01-78/2 | 0 | 0 | 0 | no choice | 1 |
| 01-78/3 | 0 | 0 | 0 | no choice | 1 |
| 01-79/11 | 0 | 0 | 10 | no choice | 1 |
| 01-80/2 | 0 | 0 | 0 | no choice | 1 |

From the results it is clear that the compositions without iron-containing complexones do not display any toxic effects in molluscs. It will also be appreciated that compositions that comprise a complexone activator but no iron-containing non-EDTA complexone (e.g. Code 01-78/3 and Code 01-79/11) do not display toxic effects in molluscs.

### Example 6

The compositions with iron-containing non-EDTA complexone DDHA (FeDDHA) described below in Table 3 can be prepared by a wide variety of methods known to those skilled in the art.

Formulations with FeDDHA:

**Table 3**

| Code | Iron complex | **Complexone Activator** | Base component | Phagostimulant | Filler | Additive |
|---|---|---|---|---|---|---|
| 01-78/5 | 4% | none | Pancake mix 96% | none | None | none |
| 01-79/4 | 4% | none | Pancake mix 92% | EggAlb 4% | None | none |
| 04-06/2 | 3% | di-Na EDTA 2% | Corn flour 34% | EggAlb 4% | CaCO₃ 20% | none |
| | | | | Sugar 2% | | |

### Example 7

In order to establish the effect of different molluscicide compositions as described in Example 6, tests according to the methodology of Example 1 were performed. Results of these experiments are described in Table 4:

### Formulations:

**Table 4**

| Code | **% mortality (average)** | | | Test type | Amount of tests |
|---|---|---|---|---|---|
| | 120 hr | 144 hr | 168 hr | | |
| 01-78/5 | 0 | 0 | 0 | no choice | 1 |
| 01-79/4 | 0 | 0 | 0 | no choice | 1 |
| 04-06/2 | 21 | 38 | 60 | free choice | 2 |

In the tests in which a toxic effect of the bait was demonstrated, the slugs became distinctly less active during the test, they got much darker coloration and evidently smaller, probably due to loss of water. In certain cases, mortality among the molluscs could already set in after two days.

From the results it is evident that inclusion of iron-containing non-EDTA complexones (in this Example FeDDHA) per se (e.g. Code 01-78/5 or 01-79/4) does not render the formulation toxic to molluscs. The use of iron-containing non-EDTA complexone, e.g. in baits, does not display toxic effects in molluscs even under conditions that it is the only food available to the molluscs ("no choice").

In contrast, it is clear from the results that formulations comprising iron-containing non-EDTA complexones and complexone activator (e.g. Code 04-06/2) are highly toxic to molluscs. This toxic effects can even be observed under conditions of lowered levels of iron-containing non-EDTA complexone (compare e.g. Code 01-79/4 with Code 04-06/2) or under the conditions that molluscs can freely choose between non-toxic fodder, like lettuce, and iron-containing non-EDTA complexone and complexone activator comprising bait.

From examples 1 through 7, it is unequivocally concluded that whereas compositions without complexones or with iron-containing non-EDTA complexones but without complexone activators, or without iron-containing non-EDTA complexones but with complexone activators, do not display toxic effects in molluscs, compositions comprising at least an iron-containing non-EDTA complexone and further comprising a complexone activator are clearly effective in molluscs.

### Example 8

The compositions with iron-containing non-EDTA complexone DTPA (FeDTPA) described below in Table 5 can be prepared by a wide variety of methods known to those skilled in the art.

### Formulations with FeDTPA complex:

**Table 5**

| Code | Iron complex | **Complexone Activator** | Base component | Phagostimulant | Filler | Additive |
|---|---|---|---|---|---|---|
| 01-78/4 | 4% | None | Pancake mix 96% | None | None | None |
| 01-79/3 | 4% | None | Pancake mix 92% | EggAlb 4% | None | None |
| 01-79/9 | 4% | di-Na EDTA 3% | Pancake mix 69% | EggAlb 4% | Bentonite 20% | None |
| 01-79/6 | 4% | di-Na EDTA 3% | Pancake mix 89% | EggAlb 4% | None | None |
| 01-91/5 | 4% | NaAc 2% | Wheat flour 68% | EggAlb 4% Sucrose 2% | CaCO₃ 20% | None |
| 01-79/12 | 4% | di-Na EDTA 1% NaAc 1% | Pancake mix 68% | EggAlb 4% Sucrose 2% | Acti-Gel208 20% | None |
| 01-79/13 | 4% | di-Na EDTA 1% NaAc 1% | Pancake mix 68% | EggAlb 4% Sucrose 2% | CaCO₃ 20% | None |
| 01-82/1 | 4% | di-Na EDTA 1% NaAc 1% | Pancake mix 64% | EggAlb 4% Sucrose 2% | CaCO₃ 20% | Span-80 4% |
| 01-82/2 | 4% | di-Na EDTA 1% NaAc 1% | Pancake mix 64% | EggAlb 4% Sucrose 2% | CaCO₃ 20% | Tween-80 4% |
| 01-82/3 | 4% | di-Na EDTA 1% NaAc 1% | Wheat flour 68% | EggAlb 4% Sucrose 2% | CaCO₃ 20% | None |
| 01-82/5 | 4% | di-Na EDTA 1% NaAc 1% | Corn flour 68% | EggAlb 4% Sucrose 2% | CaCO₃ 20% | None |
| 01-82/7 | 4% | di-Na EDTA 1% NaAc 1% | Corn flour 64% | EggAlb 4% Sucrose 2% | CaCO₃ 20% | Span-80 4% |
| 01-93/3 | 5% | NaAc 2% | Corn flour 38% Breadcrumbs 38% | EggAlb 4% Sucrose 2% | PEG 1500 10% | Banana Odour 1% |
| 01-93/4 | 5% | NaAc 2% | Wheat flour 33% Breadcrumbs 33% | EggAlb 4% Sucrose 2% | CaCO₃ 20% | Banana Odour 1% |
| 01-93/7 | 5% | di-Na EDTA 2% | Wheat flour 38% Corn flour 38% | EggAlb 4% Sugar 2% | PEG 1500 10% | Strawberry Odour 1% |
| 01-93/13 | 3% | di-Na EDTA 2% | Wheat flour 36% Corn flour 36% | Sugar 2% | CaCO₃ 20% | Banana Odour 1% |
| 01-93/10 | 3% | di-Na EDTA 1% NaAc 1% | Corn flour 36% Breadcrumbs 35% | Sugar 2% | CaCO₃ 20% | Banana Odour 1% |
| 04-01/1 | 3% | d-Na lactate 2% | Wheat flour 35% Corn flour 34% | EggAlb 4% Sugar 2% | CaCO₃ 20% | None |
| 04-01/2 | 3% | Di Na malonate 2% | Wheat flour 35% Corn flour 34% | EggAlb 4% Sugar 2% | CaCO₃ 20% | None |
| 04-01/3 | 3% | di-Na succinate 2% | Wheat flour 35% Corn flour 34% | EggAlb 4% Sugar 2% | CaCO₃ 20% | None |
| 04-03/1 | 3% | di-Na citrate 2% | Wheat flour 35% Corn flour 34% | EggAlb 4% Sugar 2% | CaCO₃ 20% | None |
| 04-03/2 | 3% | Soya lecithin 2% | Wheat flour 35% Corn flour 34% | EggAlb 4% Sugar 2% | CaCO₃ 20% | None |
| 04-02/4 | 3% | di-Na EDTA 1% di-Na malonate 1% | Wheat flour 35% Corn flour 34% | EggAlb 4% Sugar 2% | CaCO₃ 20% | None |
| 01-93/23 | 1% | di-Na EDTA 2% | Wheat flour 36% Corn flour 35% | EggAlb 4% Sugar 2% | CaCO₃ 20% | None |

### Example 9

In order to establish the effect of different molluscicide compositions as described in Example 8, tests according to the methodology of Example 1 were performed. Results of these experiments are described in Table 6:

### Formulations comprising iron-containing non-EDTA complexone FeDTPA

**Table 6**

| Code | **% mortality (average)** | | | Test type | Amount of tests |
|---|---|---|---|---|---|
| | 120 hr | 144 hr | 168 hr | | |
| 01-78/4 | 0 | 0 | 0 | no choice | 1 |
| 01-79/3 | 0 | 0 | 0 | no choice | 1 |
| 01-79/9 | 20 | 30 | 30 | no choice | 1 |
| 01-79/6 | 20 | 30 | 40 | no choice | 1 |
| 01-91/5 | 50 | 60 | 90 | free choice | 1 |
| 01-79/12 | 45 | 60 | 80 | no choice | 2 |
| 01-79/13 | 45 | 65 | 75 | free choice | 3 |
| 01-82/1 | 40 | 80 | 80 | no choice | 1 |
| 01-82/2 | 10 | 80 | 80 | no choice | 1 |
| 01-82/3 | 48 | 63 | 65 | free choice | 4 |
| 01-82/5 | 50 | 70 | 83 | free choice | 3 |
| 01-82/7 | 70 | 90 | 90 | free choice | 1 |
| 01-93/3 | 40 | 60 | 60 | free choice | 1 |
| 01-93/4 | 40 | 40 | 60 | free choice | 1 |
| 01-93/7 | 47 | 60 | 67 | free choice | 1 |
| 01-93/13 | 80 | 90 | 90 | free choice | 1 |
| 01-93/10 | 40 | 80 | 90 | free choice | 1 |
| 04-01/1 | 50 | 50 | 60 | free choice | 4 |
| 04-01/2 | 45 | 55 | 60 | free choice | 2 |
| 04-01/3 | 10 | 20 | 50 | free choice | 2 |
| 04-03/1 | 20 | 30 | 50 | free choice | 2 |
| 04-03/2 | 40 | 50 | 55 | free choice | 2 |
| 04-02/4 | 45 | 70 | 70 | free choice | 2 |
| 01-93/23 | 60 | 60 | 80 | free choice | 2 |

In the tests in which a toxic effect of the bait was demonstrated, the slugs became distinctly less active during the test, they got much darker coloration and evidently smaller, probably due to loss of water. In certain cases, mortality among the molluscs could already set in after two days.

From the results it is evident that inclusion of iron-containing non-EDTA complexones (in this Example FeDTPA) per se (e.g. Code 01-78/4 or 01-79/3) does not render the formulation toxic to molluscs. The use of iron-containing non-EDTA complexone, e.g. in baits, does not display toxic effects in molluscs even under conditions that it is the only food available to the molluscs ("no choice").

In contrast, it is clear from the results that formulations comprising iron-containing non-EDTA complexones and complexone activator (e.g. Code 01-82/3) are highly toxic to molluscs. This toxic effects can even be observed under conditions of lowered levels of iron-containing non-EDTA complexone (compare e.g. Code 01-93/23 with Code 01-79/3) or under conditions that molluscs can freely choose between non-toxic fodder, like lettuce, and iron-containing non-EDTA complexone and complexone activator comprising bait.

From examples 1 through 9, it can be unequivocally concluded that whereas compositions without complexones or with iron-containing non-EDTA complexones but without complexone activators, or without iron-containing non-EDTA complexones but with complexone activators, do not display toxic effects in molluscs, compositions comprising at least an iron-containing non-EDTA complexone and further comprising a complexone activator are clearly effective in molluscs.

Differences between different compositions can be observed. As an example in particular compositions in the formulation described in the preceding examples coded 04-06/2, 01-91/5, 01-79/12, 01-93/13, 01-93/10 are highly effective in molluscs and are therefore appropriate examples, explicitly without excluding any other composition according to the invention, of desirable compositions for the treatment of mollusc pest.

### Example 10

A molluscicide compositions comprising (in weight percentage)
- about 3 % Fe DTPA;
- about 2% di-NA EDTA;
- about 4% egg albumin;
- about 2% sugar;
- about 35% wheat flour and/or breadcrumbs;
- about 34% corn flour; and
- about 20% calcium carbonate
was prepared and tested for its molluscicide activity. The molluscicide compositions demonstrated to be effective towards molluscs.

### Example 11

Molluscicides in different dosage form suitable for use by consumers to combat or treat mollusc pests, like grains, pellets, granules, powders, capsules, solutions, dispersions, pastes, optionally with the addition of additional components like phagostimulants, surfactants, dyes, flavours, preservatives and impregnators were prepared by use of any of the compositions described in Examples 1 through 11.

### Example 12

Ten molluscs, as a model for a mollusc pest, were controlled and treated by providing bait with a composition according to the invention to the molluscs. The method is effective for mollusc pest control.

### Example 13

Ten molluscs, as a model for a mollusc pest, were controlled and treated by providing bait with the composition of example 10 to the molluscs. The method is effective for mollusc pest control.

### Example 14

Several subsequent tests according to the method described in Example 1 were performed with different compositions as described in Example 4, Example 6 and/or Example 8 .

### A.

Garden soil was put in the clean plastic or glass arena (40x20x20 cm) to cover the bottom with a layer approximately 5 cm thick. The soil was wetted and a plastic water tray (5.5 cm) was placed on three small stones to form a shelter for the slugs. Then ten fully grown *Deroceras laeve* slugs and two adult *Helix aspersa* snails were liberated in the arena. After approximately 1 hr a glass dish with the bait (2 g of the formulation 01-78/1) was placed in the arena and the "no choice" test started. The mollusc behaviour was observed once a day during the week. After 7 days the test was terminated, the dish with the bait was weighted (wet and dried) and the arena was cleaned. In this experiment all tested molluscs survived. Approximately 70% of the administered bait was consumed.

### B.

Garden soil was put in the clean plastic or glass arena (40x20x20 cm) to cover the bottom with a layer approximately 5 cm thick. The soil was wetted and a plastic water tray (5.5 cm) was placed on three small stones to form a shelter for the slugs. Then ten fully grown *Deroceras laeve* slugs and two adult *Helix aspersa* snails were liberated in the arena. After approximately 1 hr a glass dish with the bait (1g of the formulation 04-06/2) and another glass dish with a few pieces of fresh lettuce were placed in the arena and the "free choice" test started. The mollusc behaviour was observed once a day during the week. The molluscs fed on both the lettuce and the bait at the beginning, but later on only the bait was eaten. During the first three days no mortality was observed. The slugs became apathetic, their bodies shrank and darkened. The next day (96 hrs) 4 slugs were dead. After 6 days, 5 slugs and 1 snail were dead. When the test was terminated (7 days) 6 slugs and 1 snail were dead. The dish with the bait was weighted (wet and dried) and the arena was cleaned. In this experiment 4 slugs and 1 snail survived (total mortality: 58%). About 30 to 50% of the administered bait was consumed.

### C.

Garden soil was put in the clean plastic or glass arena (40x20x20 cm) to cover the bottom with a layer approximately 5 cm thick. The soil was wetted and a plastic water tray (5.5 cm) was placed on three small stones to form a shelter for the slugs. Then ten fully grown *Deroceras laeve* slugs and two adult *Helix aspersa* snails were liberated in the arena. After approximately 1 hr a glass dish with the bait (1g of the formulation 04-01/2) and another glass dish with a few pieces of fresh lettuce were placed in the arena and the "free choice" test started. The mollusc behaviour was observed once a day during the week. The molluscs fed on both the lettuce and the bait at the beginning, but later on only the bait was eaten. During the first three days no mortality was observed. The slugs became apathetic, their bodies shrank and darkened. The next day (96 hrs) 4 slugs were dead. After 6 days, 7 slugs and 1 snail were dead. When the test was terminated (7 days) 7 slugs and 1 snail were dead. The dish with the bait was weighted (wet and dried) and the arena was cleaned. In this experiment 3 slugs and 1 snail survived (total mortality: 67%). 30 to 50% of the administered bait was consumed.

### D.

Garden soil was put in the clean plastic or glass arena (40x20x20 cm) to cover the bottom with a layer approximately 5 cm thick. The soil was wetted and a plastic water tray (5.5 cm) was placed on three small stones to form a shelter for the slugs. Then ten fully grown *Deroceras laeve* slugs and two adult *Helix aspersa* snails were liberated in the arena. After approximately 1 hr a glass dish with the bait (1g of the formulation 01-93/9) and another glass dish with a few pieces of fresh lettuce were placed in the arena and the "free choice" test started. The mollusc behaviour was observed once a day during the week. The molluscs fed on both the lettuce and the bait at the beginning, but later on, only the bait was eaten. During the first two days no mortality was observed. The slugs became apathetic, their bodies shrank and darkened. The next day (72 hrs) the first slug was dead. After 6 days, 9 slugs and 1 snail were dead. When the test was terminated (7 days) all the slugs and 1 snail were dead. The dish with the bait was weighted (wet and dried) and the arena was cleaned. In this experiment no slugs and only 1 snail survived (total mortality: 92%). 30 to 50% of the administered bait was consumed.

### E.

Garden soil was put in the clean plastic or glass arena (40x20x20 cm) to cover the bottom with a layer approximately 5 cm thick. The soil was wetted and a plastic water tray (5.5 cm) was placed on three small stones to form a shelter for the slugs. Then ten fully grown *Deroceras laeve* slugs and two adult *Helix aspersa* snails were liberated in the arena. After approximately 1 hr a glass dish with the bait (1g of the formulation 01-93/32) and another glass dish with a few pieces of fresh lettuce were placed in the arena and the "free choice" test started. The mollusc behaviour was observed once a day during the week. The molluscs fed on both the lettuce and the bait at the beginning, but later on, only the bait was eaten. During the first two days no mortality was observed. The slugs became apathetic, their bodies shrank and darkened. The next day (72 hrs) the first slug was dead. After 6 days, 7 slugs and 1 snail were dead. When the test was terminated (7 days) all the slugs and 1 snail were dead. The dish with the bait was weighted (wet and dried) and the arena was cleaned. In this experiment no slugs and only 1 snail survived (total mortality: 92%). 30 to 40% of the administered bait was consumed.

### Example 15

To compare the effect of molluscicide containing Fe-EDTA (comparative example) or FE-DTPA tests according to the methodology of Example 1 were performed with formulation with code 04-25/7 (Fe-EDTA) and 01-93/13 (FE-DTPA); see Table 7. Results of these experiments are described in Table 8.

**Table 7**

| Code | Iron complex | Complexone Activator | Base component | Phagostimulant | Filler | Additive |
|---|---|---|---|---|---|---|
| 04-25/7 | 3% | none | Wheat flour 35%, Corn flour 36% | EggAlb 4%, Sugar 2% | CaCO₃ 20% | none |
| 01-93/13 | 3% | di-Na EDTA 2% | Wheat flour 32%, Corn flour 36% | EggAlb 4%, Sugar 2% | CaCO₃ 20% | Banana odour 1% |

**Table 8**

| Code | % mortality (average) | | | Test type | Amount of tests |
|---|---|---|---|---|---|
| | 120 hr | 144 hr | 168 hr | | |
| 04-25/7 | 80 | 90 | 95 | no choice | 4 |
| 01-93/13 | 90 | 93 | 95 | no choice | 3 |

From the results it is evident that molluscicides according to the invention show effect with both a high rate (quick acting) and high efficacy (high mortality).

## Claims

1. A molluscicide composition comprising at least an iron-containing complexone, wherein the complexone is an organic ligand containing at least one iminodiacetic group or two aminoacetic groups which forms stable complexes with most cations and the cation is iron (II) and/or iron (III), this is Fe²⁺ and/or Fe³⁺, **characterised in that** the composition further comprises a complexone activator, wherein the iron-containing complexone is not EDTA or HEDTA, and wherein the complexone activator is selected from the group consisting of EDTA, or anon-iron salt thereof, lecithin, more preferred soy lecithin, an organic acid or the salt thereof selected from the group consisting of malonic acid, lactic acid, succinic acid, acetic acid, or the mixtures and/or salts thereof, preferably malonic acid and/or its salt.

2. Molluscicide according to claim 1 wherein the at least an iron-containing complexone is selected from the group consisting of DTPA and DDHA, preferably DTPA.

3. A composition according to any of the preceding claims, **characterised in that** the composition comprises 1-10 w/w %, preferably 1-7 w/w%, more preferably 3-5 w/w% complexone and 0.5-8 w/w%, preferably 0.5- 5 w/w %, more preferably 1-3 w/w % complexone activator.

4. A composition according to any of the preceding claims, **characterised in that** the weight ratio between iron-containing complexone and complexone activator is in the range of 0.01-10, preferably between 0.1 - 8, more preferably between 0.5 - 3.

5. A composition according to any of the preceding claims, **characterised in that** the composition further comprises a phagostimulant.

6. A composition according to claim 5, **characterised in that** the phagostimulant is selected from the group consisting of sucrose, sugar or egg albumin.

7. A composition according to claims 5 or 6, **characterised in that** the composition comprises 1-8 w/w%, preferably 2-6 w/w % phagostimulant.

8. A composition according to any of the preceding claims, **characterised in that** the composition further comprises a base component and/or filler and/or additives.

9. A composition according to claim 8, **characterised in that** the base component is selected from one or more from the group consisting of wheat flour, corn flour, breadcrumbs and pancake mix.

10. A composition according to claims 8 or 9, **characterised in that** the filler is selected from one or more from the group consisting of bentonite, calciumcarbonate, viscosity altering components, preferably thixotropes, more preferably Acti-Gel 208, polyethylene glycols, preferably PEG 1500, diatomaceous earth, alumina, coalite chalk, pumice, ironoxide and iron hydroxide oxide.

11. A composition according to claims 8, 9 or 10, **characterised in that** the additives are selected from one or more from the group consisting of wax, water-resistance altering additives, preferably powered linseed, dyes for coloration, taste altering additives, preferably bitrex, polysorbates and/or sorbitan esters, preferably Span 80 and/or Tween 80, and odours, preferably banana odour.

12. A molluscicide composition comprising
- 1-10 w/w%, preferably 1-7 w/w%, more preferably 3-5 w/w% Fe DTPA;
- 0.5-8 w/w%, preferably 0.5- 5 w/w %, more preferably 1-3 w/w % diNa EDTA;
- 0-8 w/w %, preferably 1-7 w/w %, more preferably 2-6 w/w %, egg albumin;
- 0-5 w/w %, preferably 1-4 w/w%, more preferably 1.5-3 w/w%, sugar;
- 0-90 w/w %, preferably 20 - 70 w/w %, more preferably 25-45 w/w % of a component selected from the group consisting of wheat flour, breadcrumbs and combinations thereof;
- 0-90 w/w %, preferably 20 - 70 w/w %, more preferably 25-45 w/w % corn flour;and
- 0-40 w/w%, preferably 10-30 w/w% , more preferably 15-25 w/w % calciumcarbonate.

13. A dosage form comprising a composition according to any of the preceding claims, **characterised in that** the dosage form is selected from the group consisting of a grain, a pellet, a granule, a powder, a capsule, a solution, a dispersion, a paste, with a grain, a pellet, a tablet and a granule and a tablet being more preferred.

14. A method for mollusc pest control, comprising the step of providing bait to molluscs, **characterised in that** the composition of the bait comprises a composition, molluscicide or dosage form as defined in any of the preceding claims.

15. The method according to claim 14, **characterised in that** the composition comprises:
- 1-10 w/w%, preferably 1-7 w/w%, more preferably 3-5 w/w% Fe DTPA;
- 0.5-8 w/w%, preferably 0.5- 5 w/w %, more preferably 1-3 w/w % diNA EDTA;
- 0-8 w/w %, preferably 1-7 w/w %, more preferably 2-6 w/w %, egg albumin;
- 0-5 w/w %, preferably 1-4 w/w%, more preferably 1.5-3 w/w%, sugar;
- 0-90 w/w %, preferably 20 - 70 w/w %, more preferably 25-45 w/w % of one or more from a component selected from the group consisting of wheat flour, breadcrumbs and combinations thereof;
- 0-90 w/w %, preferably 20 - 70 w/w %, more preferably 25-45 w/w % corn flour;and
- 0-40 w/w%, preferably 10-30 w/w% , more preferably 15-25 w/w % calciumcarbonate.

16. A composition according to any of the claims 1 through 13, **characterised in that** the composition further comprises surfactants and/or dyes and/or flavours and/or impregnators and/or preservatives, preferably sorbic acid and salts thereof, ascorbic acids and salts thereof or sodium benzoate.

17. Use of an organic acid or salt thereof as a complexone activator in combination with a complexone for providing molluscicide activity and/or inducing toxic effects in molluscs, wherein the complexone is an organic ligand containing at least one iminodiacetic group or two aminoacetic groups which forms stable complexes with most cations, **characterized in that** said complexone activator or complexone per se does not or only limited display said molluscicide activity.

18. Use according to claim 17, wherein the organic acid is selected from the group consisting of malonic acid, lactic acid, succinic acid, acetic acid, or citric acid or the mixtures and/or salts thereof, preferably malonic acid and/or its salt.

19. Use according to claims 17-18, **characterised in that** the iron-containing complexone is selected from the group consisting of DTPA and DDHA, preferably DTPA.

## Patentansprüche

1. Eine molluskizide Zusammensetzung umfassend zumindest ein eisenhaltiges Komplexon, wobei es sich bei dem Komplexon um einen organischen Liganden handelt, der zumindest eine Iminodiacetat-Gruppe oder zwei Aminoacetat-Gruppen enthält, die stabile Komplexe mit den meisten Kationen bilden, und es sich bei dem Kation um Eisen (II) und/oder Eisen (III), also Fe²⁺ und/oder Fe³⁺, handelt, **dadurch gekennzeichnet, dass** die Zusammensetzung ferner einen Komplexon-Aktivator umfasst, wobei es sich bei dem eisenhaltigen Komplexon nicht um EDTA oder HEDTA handelt, und wobei der Komplexon-Aktivator aus der Gruppe bestehend aus EDTA oder einem Nichteisensalz hiervon, Lecithin, vorzugsweise Sojalecithin, einer organischen Säure oder dessen Salz, ausgewählt aus der Gruppe bestehend aus Malonsäure, Milchsäure, Bernsteinsäure, Essigsäure oder den Mischungen und/oder Salzen hiervon, vorzugsweise Malonsäure und/oder dessen Salz, ausgewählt ist.

2. Molluskizide Zusammensetzung gemäß Anspruch 1, wobei das zumindest eine eisenhaltige Komplexon aus der Gruppe bestehend aus DTPA und DDHA, vorzugsweise DTPA, ausgewählt ist.

3. Eine Zusammensetzung gemäß einem der vorangehenden Ansprüche, **dadurch gekennzeichnet, dass** die Zusammensetzung 1-10 Gew.-%, vorzugsweise 1-7 Gew.-%, bevorzugter 3-5 Gew.-%, des Komplexons sowie 0,5-8 Gew.-%, vorzugsweise 0,5-5 Gew.%, bevorzugter 1-3 Gew.-% des Komplexon-Aktivators umfasst.

4. Eine Zusammensetzung gemäß einem der vorangehenden Ansprüche, **dadurch gekennzeichnet, dass** das Gewichtsverhältnis zwischen eisenhaltigem Komplexon und Komplexon-Aktivator im Bereich von 0,01-10, vorzugsweise zwischen 0,1-8, bevorzugter zwischen 0,5-3, liegt.

5. Eine Zusammensetzung gemäß einem der vorangehenden Ansprüche, **dadurch gekennzeichnet, dass** die Zusammensetzung ferner ein Phagostimulans umfasst.

6. Eine Zusammensetzung gemäß Anspruch 5, **dadurch gekennzeichnet, dass** das Phagostimulans aus der Gruppe bestehend aus Saccharose, Zucker oder Eieralbumin ausgewählt ist.

7. Eine Zusammensetzung gemäß Anspruch 5 oder 6, **dadurch gekennzeichnet, dass** die Zusammensetzung 1-8 Gew.-%, vorzugsweise 2-6 Gew.-% des Phagostimulans umfasst.

8. Eine Zusammensetzung gemäß einem der vorangehenden Ansprüche, **dadurch gekennzeichnet, dass** die Zusammensetzung ferner eine Basiskomponente und/oder Füllstoffe und/oder Zusatzstoffe umfasst.

9. Eine Zusammensetzung gemäß Anspruch 8, **dadurch gekennzeichnet, dass** die Basiskomponente aus einem oder mehreren der Gruppe bestehend aus Weizenmehl, Maismehl, Paniermehl und Pfannkuchen-Backmischung ausgewählt ist.

10. Eine Zusammensetzung gemäß Anspruch 8 oder 9, **dadurch gekennzeichnet, dass** der Füllstoff aus einem oder mehreren der Gruppe bestehend aus Bentonit, Calciumcarbonat, viskositätsverändernden Zusätzen, vorzugsweise thixotrope Substanzen, bevorzugter Acti-Gel 208, Polyethylenglykole, vorzugsweise PEG 1500, Kieselerde, Tonerde, Koalitkalk, Bimsstein, Eisenoxid und Eisenlrydroxidoxid, ausgewählt ist.

11. Eine Zusammensetzung gemäß Anspruch 8, 9 oder 10, **dadurch gekennzeichnet, dass** die Zusatzstoffe aus einem oder mehreren der Gruppe bestehend aus Wachs, wasserbeständigkeitsverändernden Zusätzen, vorzugsweise Leinsamenpulver, Färbemitteln, geschmacksverändernde Zusätzen, vorzugsweise Bitrex, Polysorbate und/oder Sorbitanester, vorzugsweise Span 80 und/oder Tween 80, sowie Geruchsstoffen, vorzugsweise Bananengeruch, ausgewählt ist.

12. Eine molluskizide Zusammensetzung umfassend
- 1-10 Gew.-%, vorzugsweise 1-7 Gew.-%, bevorzugter 3-5 Gew.-% Fe DTPA;
- 0,5-8 Gew.-%, vorzugsweise 0,5-5 Gew.-%, bevorzugter 1-3 Gew.-% diNa EDTA;
- 0-8 Gew.-%, vorzugsweise 1-7 Gew.-%, bevorzugter 2-6 Gew.-% Eieralbumin;
- 0-5 Gew.-%, vorzugsweise 1-4 Gew.-%, bevorzugter 1,5-3 Gew.-% Zucker;
- 0-90 Gew.-%, vorzugsweise 20-70 Gew.-%, bevorzugter 25-45 Gew.-% eines Bestandteils ausgewählt aus der Gruppe bestehend aus Weizenmehl, Paniermehl und Kombinationen hiervon;
- 0-90 Gew.-%, vorzugsweise 20-70 Gew.-%, bevorzugter 25-45 Gew.-% Maismehl; und
- 0-40 Gew.-%, vorzugsweise 10-30 Gew.-%, bevorzugter 15-25 Gew.-% Calciumcarbonat.

13. Eine Darreichungsform umfassend eine Zusammensetzung gemäß einem der vorangehenden Ansprüche, **dadurch gekennzeichnet, dass** die Darreichungsform ausgewählt ist aus der Gruppe umfassend ein Korn, ein Pellet, ein Granulat, ein Pulver, eine Kapsel, eine Lösung, eine Dispersion, eine Paste, wobei ein Korn, ein Pellet, eine Tablette sowie ein Granulat und eine Tablette bevorzugter sind.

14. Ein Verfahren zur Bekämpfung von mollusken Schädlingen, umfassend den Schritt des Bereitstellens eines Köders für Mollusken, **dadurch gekennzeichnet, dass** die Zusammensetzung des Köders eine Zusammensetzung, ein Molluskizid oder eine Darreichungsform wie in einem der vorangehenden Ansprüche angegeben umfasst.

15. Das Verfahren gemäß Anspruch 14, **dadurch gekennzeichnet, dass** die Zusammensetzung umfasst:
- 1-10 Gew.-%, vorzugsweise 1-7 Gew.-%, bevorzugter 3-5 Gew.-% Fe DTPA;
- 0,5-8 Gew.-%, vorzugsweise 0,5-5 Gew.-%, bevorzugter 1-3 Gew.-% diNa EDTA;
- 0-8 Gew.-%, vorzugsweise 1-7 Gew.-%, bevorzugter 2-6 Gew.-% Eieralbumin;
- 0-5 Gew.-%, vorzugsweise 1-4 Gew.-%, bevorzugter 1,5-3 Gew.-% Zucker;
- 0-90 Gew.-%, vorzugsweise 20-70 Gew.-%, bevorzugter 25-45 Gew.-% von einem oder mehreren Bestandteilen, ausgewählt aus der Gruppe bestehend aus Weizenmehl, Paniermehl und Kombinationen hiervon;
- 0-90 Gew.-%, vorzugsweise 20-70 Gew.-%, bevorzugter 25-45 Gew.-% Maismehl; und
- 0-40 Gew.-%, vorzugsweise 10-30 Gew.-%, bevorzugter 15-25 Gew.-% Calciumcarbonat.

16. Eine Zusammensetzung gemäß einem der Ansprüche 1 bis 13, **dadurch gekennzeichnet, dass** die Zusammensetzung ferner Tenside und/oder Färbemittel und/oder Geschmacksstoffe und/oder Imprägniermittel und/oder Konservierungsmittel, vorzugsweise Sorbinsäure und deren Salze, Ascorbinsäure und deren Salze oder Natriumbenzoat, umfasst.

17. Verwendung einer organischen Säure oder eines Salzes hiervon als Komplexon-Aktivator in Verbindung mit einem Komplexon zum Erzielen einer molluskiziden Wirkung und/oder zum Hervorrufen eines toxischen Effekts in Mollusken, wobei es sich beim dem Komplexon um einen organischen Liganden handelt, der zumindest eine Iminodiacetat-Gruppe oder zwei Aminoacetat-Gruppen enthält, die stabile Komplexe mit den meisten Kationen bilden, **dadurch gekennzeichnet, dass** der Komplexon-Aktivator oder das Komplexon an sich die molluskizide Wirkung nicht oder nur in begrenztem Umfang aufweisen.

18. Verwendung gemäß Anspruch 17, wobei die organische Säure aus der Gruppe bestehend aus Malonsäure, Milchsäure, Bernsteinsäure, Essigsäure, Zitronensäure oder den Mischungen und/oder Salzen hiervon, vorzugsweise Malonsäure und/oder dessen Salz, ausgewählt ist.

19. Verwendung gemäß Anspruch 17-18, **dadurch gekennzeichnet, dass** das eisenhaltige Komplexon aus der Gruppe bestehend aus DTPA und DDHA, vorzugsweise DTPA, ausgewählt ist.

## Revendications

1. Composition molluscicide comprenant au moins un complexone contenant du fer, dans laquelle le complexone est un ligand organique contenant au moins un groupe iminodiacétique ou deux groupes aminoacétiques qui forme des complexes stables avec la plupart des cations et le cation est le fer (II) et/ou le fer (III), en d'autres termes Fe²⁺ et/ou Fe³⁺, **caractérisée en ce que** la composition comprend en outre un activateur de complexone, dans laquelle le complexone contenant du fer n'est pas l'EDTA ni l'HEDTA, et dans laquelle l'activateur de complexone est sélectionné dans le groupe constitué de l'EDTA, ou d'un sel non ferreux de celui-ci, de la lécithine, de préférence de la lécithine de soja, d'un acide organique ou du sel de celui-ci sélectionné dans le groupe constitué de l'acide malonique, de l'acide lactique, de l'acide succinique, de l'acide acétique, ou des mélanges et/ou sels de ceux-ci, de préférence de l'acide malonique et/ou son sel.

2. Molluscicide selon la revendication 1, dans lequel le ou les complexones contenant du fer sont sélectionnés dans le groupe constitué du DTPA et du DDHA, de préférence du DTPA.

3. Composition selon l'une quelconque des revendications précédentes, **caractérisée en ce que** la composition comprend de 1 à 10 % p/p, de préférence de 1 à 7 % p/p, de manière davantage préférée de 3 à 5 % p/p de complexone et de 0,5 à 8 % p/p, de préférence de 0,5 à 5 % p/p, de manière davantage préférée de 1 à 3 % p/p d'activateur de complexone.

4. Composition selon l'une quelconque des revendications précédentes, **caractérisée en ce que** le rapport en poids entre le complexone contenant du fer et l'activateur du complexone se trouve dans la plage de 0,01 à 10, de préférence de 0,1 à 8, de manière davantage préférée de 0,5 à 3.

5. Composition selon l'une quelconque des revendications précédentes, **caractérisée en ce que** la composition comprend en outre un phagostimulant.

6. Composition selon la revendication 5, **caractérisée en ce que** le phagostimulant est sélectionné dans le groupe constitué du saccharose, du sucre ou de l'albumine d'oeuf.

7. Composition selon la revendication 5 ou 6, **caractérisée en ce que** la composition comprend de 1 à 8 % p/p, de préférence de 2 à 6 % p/p de phagostimulant.

8. Composition selon l'une quelconque des revendications précédentes, **caractérisée en ce que** la composition comprend en outre un composant de base et/ou une charge et/ou des additifs.

9. Composition selon la revendication 8, **caractérisée en ce que** le composant de base est sélectionné parmi un ou plusieurs éléments du groupe constitué de la farine de blé, de la farine de maïs, de la chapelure et d'un mélange pour pancakes.

10. Composition selon la revendication 8 ou 9, **caractérisée en ce que** la charge est sélectionnée parmi un ou plusieurs éléments du groupe constitué de la bentonite, du carbonate de calcium, de composants modifiant la viscosité, de préférence des thixotropes, de préférence Acti-Gel 208, des polyéthylène glycols, de préférence le PEG 1500, de la terre de diatomées, de l'alumine, de la craie de coalite, de la pierre ponce, de l'oxyde de fer et de l'oxyde d'hydroxyde de fer.

11. Composition selon la revendication 8, 9 ou 10, **caractérisée en ce que** les additifs sont sélectionnés parmi un ou plusieurs éléments du groupe constitué de la cire, d'additifs modifiant la résistance à l'eau, de préférence de la poudre de graines de lin, de colorants pour coloration, d'additifs modifiant le goût, de préférence le bitrex, de polysorbates et/ou d'esters de sorbitane, de préférence Span 80 et/ou Tween 80, et d'odeurs, de préférence l'odeur de banane.

12. Composition molluscicide comprenant :
- de 1 à 10 % p/p, de préférence de 1 à 7 % p/p, de manière davantage préférée de 3 à 5 % p/p de Fe DTPA ;
- de 0,5 à 8 % p/p, de préférence de 0,5 à 5 % p/p, de manière davantage préférée de 1 à 3 % p/p de diNa EDTA ;
- de 0 à 8 % p/p, de préférence de 1 à 7 % p/p, de manière davantage préférée de 2 à 6 % p/p, d'albumine d'oeuf ;
- de 0 à 5 % p/p, de préférence de 1 à 4 % p/p, de manière davantage préférée de 1,5 à 3 % p/p, de sucre ;
- de 0 à 90 % p/p, de préférence de 20 à 70 % p/p, de manière davantage préférée de 25 à 45 % p/p d'un composant sélectionné dans le groupe constitué de la farine de blé, de la chapelure et des combinaisons de celles-ci ;
- de 0 à 90 % p/p, de préférence de 20 à 70 % p/p, de manière davantage préférée de 25 à 45 % p/p de farine de maïs ; et
- de 0 à 40 % p/p, de préférence de 10 à 30 % p/p, de manière davantage préférée de 15 à 25 % p/p de carbonate de calcium.

13. Forme galénique comprenant une composition selon l'une quelconque des revendications précédentes, **caractérisée en ce que** la forme galénique est sélectionnée dans le groupe constitué d'une graine, d'une pastille, d'un granule, d'une poudre, d'une gélule, d'une solution, d'une dispersion, d'une pâte et d'un comprimé, une graine, une pastille, d'un comprimé et un granule et un comprimé étant préférés entre tous.

14. Procédé de lutte contre les mollusques nuisibles, comprenant l'étape consistant à fournir un leurre aux mollusques, **caractérisé en ce que** la composition du leurre comprend une composition, un molluscicide ou une forme galénique selon l'une quelconque des revendications précédentes.

15. Procédé selon la revendication 14, **caractérisé en ce que** la composition comprend :
- de 1 à 10 % p/p, de préférence de 1 à 7 % p/p, de manière davantage préférée de 3 à 5 % p/p de Fe DTPA ;
- de 0,5 à 8 % p/p, de préférence de 0,5 à 5 % p/p, de manière davantage préférée de 1 à 3 % p/p de diNa EDTA ;
- de 0 à 8 % p/p, de préférence de 1 à 7 % p/p, de manière davantage préférée de 2 à 6 % p/p, d'albumine d'oeuf ;
- de 0 à 5 % p/p, de préférence de 1 à 4 % p/p, de manière davantage préférée de 1,5 à 3 % p/p, de sucre ;
- de 0 à 90 % p/p, de préférence de 20 à 70 % p/p, de manière davantage préférée de 25 à 45 % p/p d'un ou plusieurs composants sélectionnés dans le groupe constitué de la farine de blé, de la chapelure et des combinaisons de celles-ci ;
- de 0 à 90 % p/p, de préférence de 20 à 70 % p/p, de manière davantage préférée de 25 à 45 % p/p de farine de maïs ; et
- de 0 à 40 % p/p, de préférence de 10 à 30 % p/p, de manière davantage préférée de 15 à 25 % p/p de carbonate de calcium.

16. Composition selon l'une quelconque des revendications 1 à 13, **caractérisée en ce que** la composition comprend en outre des surfactants et/ou des colorants et/ou des arômes et/ou des imprégnateurs et/ou des conservateurs, de préférence l'acide sorbique et les sels de celui-ci, les acides ascorbiques et les sels de ceux-ci ou le benzoate de sodium.

17. Utilisation d'un acide organique ou d'un sel de celui-ci en tant qu'activateur de complexone en combinaison avec un complexone pour fournir une activité molluscicide et/ou induire des effets toxiques chez les mollusques, dans laquelle le complexone est un ligand organique contenant au moins un groupe iminodiacétique ou deux groupes aminoacétiques qui forme des complexes stables avec la plupart des cations, **caractérisée en ce que** ledit activateur de complexone ou ledit complexone en soi ne présente pas ladite activité molluscicide ou ne présente qu'une faible activité molluscicide.

18. Utilisation selon la revendication 17, dans laquelle l'acide organique est sélectionné dans le groupe constitué de l'acide malonique, de l'acide lactique, de l'acide succinique, de l'acide acétique, ou de l'acide citrique ou des mélanges et/ou sels de ceux-ci, de préférence l'acide malonique et/ou son sel.

19. Utilisation selon les revendications 17 à 18, **caractérisée en ce que** le complexone contenant le fer est sélectionné dans le groupe constitué du DTPA et du DDHA, de préférence du DTPA.
